Europäisches Patentamt

European Patent Office

Office européen des brevets

(11) Publication number: **0 262 111**
**A2**

# EUROPEAN PATENT APPLICATION

(21) Application number: 87870125.9

(22) Date of filing: 14.09.87

(51) Int. Cl.⁴: **F 16 H 3/72**
**B 60 K 17/04**

(30) Priority: 25.09.86 BE 217206

(43) Date of publication of application:
**30.03.88 Bulletin 88/13**

(84) Designated Contracting States:
**AT CH DE ES FR GB GR IT LI NL SE**

(71) Applicant: **Van Camp, Guido**
**Goorstraat 7**
**B-2230 Schilde (BE)**

(72) Inventor: **Van Camp, Guido**
**Goorstraat 7**
**B-2230 Schilde (BE)**

(54) **Twin epicycloid system.**

(57) Transmission system for automobiles, in substitition for a differential or analogue device, based on a combination of pinions and where the distribution left/right to the driveshafts is not necessary dependant, but where it is possible to impose two different and independant rotationspeeds to the driveshafts.

Such a combination of pinions consists of two epicycloides coupled together (figure I).

FIGURE I

Bundesdruckerei Berlin

**Description**

The TWIN EPICYCLOIDE SYSTEM

This patent describes a new system, based on the combinations of pinions, for the powertransmission and the powerdistribution from one driving to two driven axles for automobiles.

In the actuel transmission systems, the driving couple is distributed to the two driven axles by a differential, a planetary system or an analogue system. These systems are designed in such a way that they allow rotation-differences between the two driven axles.

Such rotation-differences can occur f.i. in a bend: the outside wheel is turning faster than the inside wheel.

It's the action of the wheels on the differential that defines the proportion on which this one will divide the power between them. The main inconvenience of a classic differential consists in the fact that it loses all it's efficiency once even a single driven wheel loses it's grip: all the energy is lost on the spinning of that wheel (because the driving power takes the line of least resistance) and the other wheel, having enough grip to transmit power, is not driven.

To avoid this effect and trying to ensure the propulsion, the differential can be blocked, to neutralise more or less the differential working.

Such a system to block a differential can be either: a device where the rotation difference between the drive-shafts introduces some resistance (friction plates, viscosystem,...) that reduces the differentials freedom.

or a system where the particular design and the configuration of the pinions limits the rotation differences and makes them depending of the forces acting on the wheels (cfr. TORSEN).

or the most sophisticated device, controlling the action of the differential, most currently by reducing the rotationspeed on one outputside, after comparing and interpreting results (steering angle, speed differences, ...) registered by sensors.

or a normal (manual) switched device.

or combinations of the above solutions.

In all these cases the differential remains classic, his working being dictated mainly by the action of the wheels on the system (passive system), eventually influenced by a less or more sophisticated lock device. Essential is to remark the dependency of the rotation speeds of the drive-shafts: increasing the rotation on one side leeds to an equivalent decreasing of the rotation on the other side.

The problem with most of these lock-devices is that they become actif after detecting an imperfection in the transmission - thus to late.

This patent describes a new system for powertransmission in automobiles, able to substitute a differential or analogue device, based on a combination of pinions and where the distribution left/right to the driveshafts is not necessary dependant, because the new system makes it possible to impose two different and totaly independent rotationspeeds to the driveshafts.

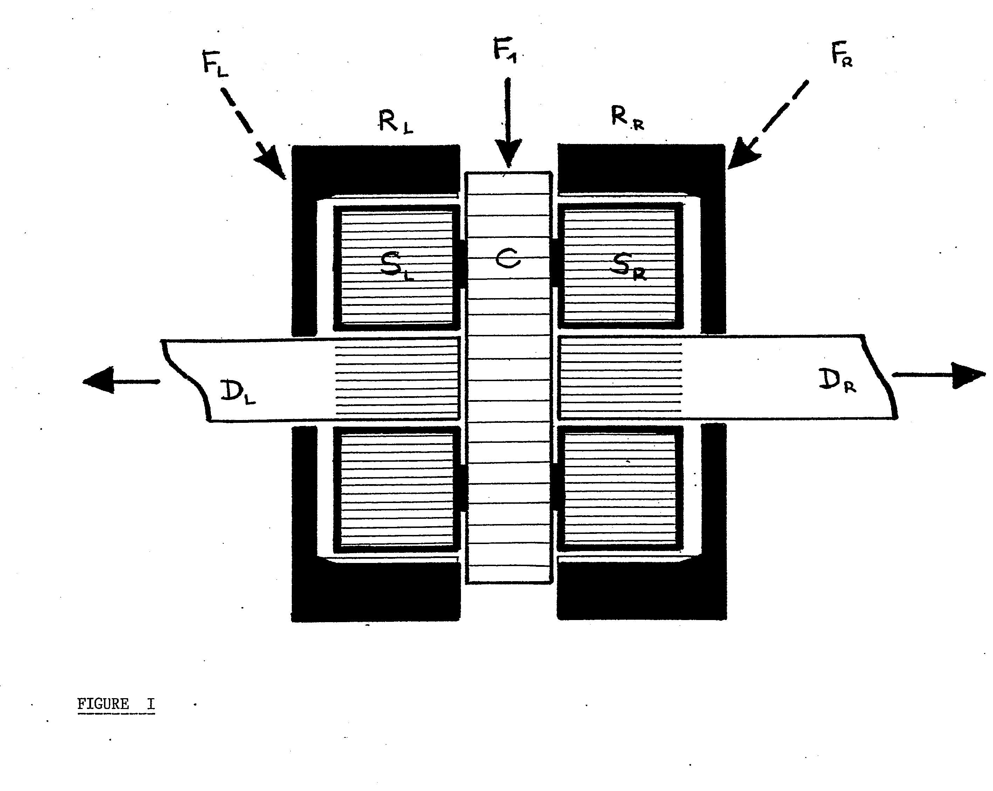

Such a system is obtained by a parallel combination of two epicycloids. One possible (but non limitatif) configuration is showed in figure 1. Here the two driveshafts (D) acts as sunwheels of the epicycloids.

The two pairs of satellitewheels (S) are independently mounted upon the same satellitesupport (C). This satellitesupport (C) receives the enginecouple in the same way as the crownpinion in a classic differential. The two pairs of satellitewheels (S) are externaly surmounted by two independant ringwheels (R).

When the crownpinion -here the satellitesupport- (C) is driven, we are able to increase or decrease the final rotation of the driveshafts (D) by moving these ringwheels (R). The rotation imposed to the left ringwheel can be totaly different from that one on the right ringwheel.

This means that the two final rotations of the driveshafts (D) are defined by three independent forces (F) acting on the system.

Now we are able to control and influence the powerdistribution to the driveshafts (D) within any proportion, the leftside totaly independently of the right one, and this in a full rigid transmission.

The main advantage of the new system consists in the fact that it doesn't show any more the disadvantages of the classic differentials (locked or not):

- the left/right distribution of the propulsion force can be steered according external data (fi. turning radius,...), we impose the wheels to have the theoretically exact rotation at any moment.

- the system assures the traction if only one single wheel is able to transmit power. Even more: when the grip of one wheel becomes worse, the wheel will keep on rotating at his exact speed; this means that at any moment, the energy transmitted by that wheel to the road surface will be at his maximum value. The portion of energie that the wheel is unable to transmit to the road is transfered to the opposite wheel. This action is instantaneous, all natural and smooth, without any detection supply. Due to the exact rotation, the wheel will transmit again power by the very first moment of regaining contact.

Theoreticly this new system can suit for any automobile to replace the actual differential. It would not only lose traction problems, but would certainly have also advantages when braking while it is totaly impossible to lock one single wheel of an axle provided with this new system.

**Claims**

1) Transmission system, in substitution for a differential or analogue device, based on a combination of pinions and where the distribution left/right to the driveshafts is not necessary dependant, but where it is possible to impose two different and independant rotationspeeds to the driveshafts.

Such a combination of pinions consists of two epicycloids coupled together. This can f.i. be obtained by mounting the satellitewheels (S) on the same satellitesupport (C) - fig. 1.

In this configuration the satellitesupport will act as crownwheel of the transmission, receiving the powerinput.

The driveshafts act as sunwheels (D).

The two ringwheels (R) are now the elements to steer independently the final resulting rotation of the driveshafts (D), according to the forces acting on them.

2) Any other variation in the coupling of the two epicicloids, so the elements where the driving, driven and steering forces act on are changed.

3) Any other extension, adaptation, variation or coupling from, with or around the systems as described in 1) and 2)

FIGURE I